# EUROPÄISCHE PATENTANMELDUNG

(11) **EP 2 138 797 A2**
(43) Veröffentlichungstag der Anmeldung: **30.12.2009**
(21) Anmeldenummer: 09163619.1
(22) Anmeldetag: 24.06.2009
(51) Int. Cl.: F28F 3/12

(54) **Heizplatte, insbesondere für Backofen**

(30) Priorität: 25.06.2008 DE 102008002650
(71) Anmelder: MIWE Michael Wenz GmbH, 97450 Arnstein (DE)
(72) Erfinder: Frings, Thomas, 53518, Adenau (DE)
(74) Vertreter: Patentanwälte Freischem

(57) **Zusammenfassung**

Die Erfindung betrifft eine Heizplatte (1) mit mehreren parallelen Heizkanälen (6-21; 40-54) zur Aufnahme eines Heizmediums, insbesondere Thermoöl, und mit mehreren, im Randbereich der Heizplatte (1) angeordneten Querkanälen (22-31; 64-69), welche mindestens zwei der Heizkanäle (6-21; 40-54) miteinander verbinden, wobei die Heizkanäle (6-21; 40-54) zwischen den Randbereichen der Heizplatte (1) mindestens eine Unterbrechung aufweisen und zusätzliche Querkanäle (32-39; 56-63) im Bereich der Unterbrechung jeweils zwei zueinander parallele Heizkanäle (6-21; 40-54) miteinander verbinden.

Aufgabe der Erfindung ist es, eine Heizplatte zu schaffen, die für Durchbiegungen weniger anfällig ist.

Diese Aufgabe wird dadurch gelöst, dass im Bereich der Unterbrechung der Heizkanäle (6-21; 40-54) ein Verstärkungsprofil (74) angeordnet ist.

Die Erfindung betrifft ferner einen mit derartigen Heizplatten ausgestatteten Backofen.

## Beschreibung

### Technisches Gebiet

Die Erfindung betrifft eine Heizplatte gemäß dem Oberbegriff des Patentanspruchs 1. Die Erfindung betrifft ferner einen Backofen mit einer derartigen Heizplatte.

### Stand der Technik

Heizplatten mit Heizkanälen sind zur Verwendung in Thermoöl-Öfen zur Beheizung gewerblicher Backöfen bekannt. Beispielsweise offenbart die Druckschrift DE 296 16 533 U1 eine derartige Heizplatte.

Diese Heizplatten bestehen aus miteinander verschweißten Blechen, welche in eine derartige Form gebracht sind, dass zwischen ihnen Hohlräume entstehen, welche die Heizkanäle bilden. Die Bleche sind in streifenförmigen Abschnitten gewölbt und streifenweise durch Rollschweißnähte derart miteinander verbunden, dass sich in Längsrichtung des Bleches erstreckende Heizkanäle entstehen. Am Ende der Heizkanäle und in dem Randbereich der Heizplatte werden zwischen den Blechen kurze Querkanäle ausgebildet, welche zwei oder mehrere zueinander parallele Heizkanäle miteinander verbinden. Die Querkanäle können auch so ausgebildet werden, dass sie mehr als zwei Heizkanäle miteinander verbinden. Von den Enden dieser Querkanälen ausgehend erstrecken sich weitere Heizkanäle bis zum anderen Querrand der Heizplatte, wo mindestens ein weiterer Querkanal angeordnet ist. Auf diese Weise werden über die gesamte Breite der Heizplatte im Wesentlichen aneinander angrenzende Kanäle angeordnet, welche das Heizmittel (z.B. Thermoöl) führen. Der erste Heizkanal ist mit einem Zulauf verbunden und der letzte Heizkanal mit einem Ablauf. Zulauf und Ablauf sind mit Umwälzpumpen verbunden, welche das Thermoöl in Fluss halten und gegebenenfalls einer Heizvorrichtung wie einem Brenner oder einem elektrischen Heizelement zuführen.

Die Anordnung von jeweils aneinander angrenzenden, zueinander parallelen Heizkanälen in einer durch zwei verschweißte Bleche gebildeten Heizplatte hat sich in der Technik zur Erzielung optimaler Backergebnisse bewährt. Derartige Heizplatten erzeugen über die gesamte Länge eines Backofens, die in der Größenordnung von 3 m liegen kann, sowie über seine gesamte Breite (in der Größenordnung von 2,5 m) eine gleichmäßige Hitzeentwicklung, die für die Erzielung eines gleichmäßigen und vorhersagbaren Backergebnisses im gesamten Bereich der Heizplatte notwendig ist. Allerdings besteht die Gefahr, dass die erhitzten Heizplatten mit der Zeit durchbiegen. Zum einen tragen sie die Backwaren, welche bei enger Belegung mit schwerem Gebäck (z.B. Brote) über die gesamte Fläche von beispielsweise 5 m² oder mehr ein erhebliches Gewicht haben. Zum anderen werden die Heizkanäle durch Thermoöl durchströmt, welches ein nicht zu vernachlässigendes Eigengewicht aufweist. Schließlich kommt das Eigengewicht der Heizplatte (aus Stein oder Stahl) sowie ggf. Backformen hinzu.

Das Durchbiegen der Heizplatten ist nachteilig, da eine durchgebogene Heizplatte den darunter liegenden Raum reduziert und somit das Volumen der einzubringenden Backwaren beschränkt. Außerdem liegen auf der Heizplatte häufig Backplatten auf, welche ebenfalls durchbiegen können. Eine durchgebogene Backplatte kann die Handhabung der Backwaren durch automatische Beschickungsvorrichtungen zum Einbringen und Entnehmen der Backwaren erheblich erschweren.

Aus der Druckschrift DE 1 460 453 A ist eine Chemisch-Reinigungsmaschine für Textilgut mit einer Destillierblase bekannt, die einen ebenen beheizbaren Boden zum Verdampfen von in der Destillierblase angesammeltem Lösungsmittel aufweist. Der beheizbare Boden ist plattenförmig und weist mäanderartige Kanäle zum Hindurchleiten eines Heizmittels (Wasserdampf) gemäß dem Oberbegriff des Patentanspruchs 1 auf. Ein derartiger beheizbarer Boden einer Destillierblase benötigt aber keine erhöhte Steifigkeit, da er keinen höheren Gewichtslasten ausgesetzt ist.

### Darstellung der Erfindung

Aufgabe der Erfindung ist es, eine Heizplatte zu schaffen, die für Durchbiegungen weniger anfällig ist.

Diese Aufgabe wird erfindungsgemäß durch die Gesamtheit der Merkmale des Patentanspruchs 1 gelöst.

Die Heizkanäle erstrecken sich nicht über die gesamte Länge der Heizplatte, sondern lediglich über einen Teil der Länge der Heizplatte. Jeder Abschnitt, der einen Heizkanal bildet, kann beispielsweise in einer Hälfte oder einem Drittel der Gesamtlänge der Heizplatte liegen. Jeder Heizkanalabschnitt ist an seinem Ende mit einem parallelen Heizkanalabschnitt durch einen Querkanal verbunden. Durch die Erstreckung des Querkanals wird der Widerstand der Heizplatte gegen Durchbiegung bereits gesteigert. Das Profil der bekannten Heizkanäle für Heizplatten in Backöfen, die sich über die gesamte Länge der Heizplatte erstrecken, schwächt die Platte und führt zu einer Durchbiegung in einer Biegelinie, die in Querrichtung der Heizplatte verläuft.

Die zusätzlichen in Querrichtung verlaufenden Querkanäle im Bereich der Mitte der Heizplatte steigern den Biegewiderstand. Dies gilt insbesondere dann, wenn die Querkanäle eine erhebliche Länge aufweisen. Um dies zu erreichen, können die Heizkanäle jeweils in Paaren oder Dreiergruppen zueinander parallel geführt sein. Das heißt, dass sich zwei oder drei zueinander parallele Kanäle von der Zuströmöffnung parallel zur Unterbrechung hin erstrecken. Im Bereich der Unterbrechung schließen an beiden oder an allen drei Kanälen Querkanäle an, welche jeweils zueinander parallel verlaufen. Die Querkanäle der inneren, unmittelbar zueinander benachbarten Heizkanäle sind sehr kurz und im Wesentlichen durch die Wandstärke definiert, die beide Heizkanäle trennt. Die äußeren Querkanäle sind länger als die Querkanäle der inneren, zueinander benachbarten Heizkanäle, da sie außerhalb der inneren Kanäle liegen und deren Breite überbrücken müssen. Gemäß der Erfindung ist im Bereich der Unterbrechung der Heizkanäle ein Verstärkungsprofil angeordnet. Das Verstärkungsprofil kann bei der erfindungsgemäßen Platte keine undichten Stellen erzeugen, da es mit dem Material der Platte im Bereich der Unterbrechung und nicht im Bereich eines Heizkanals verbunden ist. Im Unterbrechungsbereich wird kein Thermoöl geführt. Die Biegesteifigkeit der Heizplatte wird durch das Verstärkungsprofil erheblich erhöht. Die gesamte strukturelle Tragfähigkeit der Anordnung bestehend aus Heizplatte und Verstärkungsprofil ist gegenüber bekannten Heizplatten erheblich gesteigert. Das Verstärkungsprofil besteht vorzugsweise aus Stahl.

Dieses Verstärkungsprofil kann in der Praxis mit dem Material der Heizplatte verschweißt sein.

Die Unterbrechung der Heizkanäle kann bei einer praktischen Ausführungsform in der Mitte der Heizplatte angeordnet sein. An die Unterbrechung schließen sich dann zu beiden Seiten Heizkanäle an, welche sich jeweils etwa über die Hälfte der Länge der Heizplatte erstrecken. Wenn die Heizkanäle über die Länge der Heizplatte zweimal unterbrochen sind, können sie eine Länge aufweisen, die einem Drittel der Plattenlänge entspricht.

Sinnvollerweise werden zu beiden Seiten der Unterbrechung voneinander getrennte Heizkanalgruppen gebildet. Mit anderen Worten liegen die sich über Abschnitte der Heizplatte erstreckenden Heizkanäle sowie die diese Heizkanäle verbindenden Querkanäle der ersten Gruppe auf einer Seite der Unterbrechung. Die Heizkanäle sowie die diese verbindenden Querkanäle der zweiten Gruppe liegen auf der zweiten Seite der Unterbrechung.

Ferner kann in der Praxis im Bereich der Unterbrechung der Heizkanäle eine Aussparung angeordnet sein, welche durch das Verstärkungsprofil durchragt wird. Auf diese Weise kann das Verstärkungsprofil eine Dicke erhalten, die der Gesamtdicke der Heizplatte entspricht oder diese übersteigt, ohne den Raumbedarf für die Heizplatte erheblich zu steigern. Auf diese Weise ist es nach wie vor möglich, die Heizplatte mit geringem Raumbedarf zwischen die verschiedenen Etagen eines gewerblichen Ofens einzufügen, obwohl die Biegesteifigkeit der Heizplatte durch die Höhe des Verstärkungsprofils erheblich erhöht wird. Das Verstärkungsprofil besteht vorzugsweise aus Stahl und ist vorzugsweise mit dem Blechmaterial der Heizplatte im Bereich der Aussparung verschweißt.

In aller Regel erfolgen die Zuströmung und die Abströmung von Thermoöl an der Rückwand oder der Seitenwand eines Backofens. Wenn die Heizkanäle aber in unterschiedlichen, voneinander getrennten Kanalgruppen angeordnet sind, welche sich zu beiden Seiten einer Unterbrechung befinden, ist es erforderlich, das Thermoöl über die Unterbrechung hinauszutransportieren. Zu diesem Zweck können Zuströmkanäle und Abströmkanäle vorgesehen sein, die sich parallel zu den Heizkanälen im Wesentlichen über die gesamte Länge der Heizplatte erstrecken. In der Praxis kann auch im Bereich dieser Zuströmkanäle und Abströmkanäle das Verstärkungsprofil vorgesehen sein. Es kann im Bereich der Zuströmkanäle und der Abströmkanäle auf der gegen die Heizplatte anliegenden Seite eine Aussparung aufweisen, welche die Zuströmkanäle oder Abströmkanäle aufnimmt. Auf diese Weise wird ein direkter Materialkontakt zwischen dem Verstärkungsprofil und den Zuströmkanälen oder Abströmkanälen vermieden, welcher zu einer Ermüdung der Kanalwand und zu einem Austritt von Thermoöl führen könnte. Im Randbereich der Heizplatte außerhalb der Zuströmkanäle oder Abströmkanäle kann das Verstärkungsprofil wieder bis zum Blechmaterial der Heizplatte selbst reichen und dort erforderlichenfalls mit dem Rand der Heizplatte verschweißt sein. Auf diese Weise versteift das Verstärkungsprofil die Heizplatte über ihrer gesamten Quererstreckung.

### Kurze Beschreibung der Abbildungen der Zeichnungen

Eine Ausführungsform der Erfindung wird nachfolgend unter Bezugnahme auf die beigefügten Zeichnungen beschrieben.

Fig. 1 zeigt eine Draufsicht auf eine erfindungsgemäße Heizplatte.

Fig. 2 zeigt eine Querschnittansicht der Heizplatte im Bereich der vier Heizkanäle 7 bis 9.

Fig. 3 zeigt eine Seitenansicht eines Verstärkungsprofils der Heizplatte aus Fig. 1.

Fig. 4 zeigt eine Ansicht der entlang des Verstärkungsprofils geschnittenen Heizplatte.

Fig. 5 zeigt eine vergrößerte Ansicht des mittleren Bereichs des Verstärkungsprofils aus Fig. 4.

### Ausführungsform(en) der Erfindung

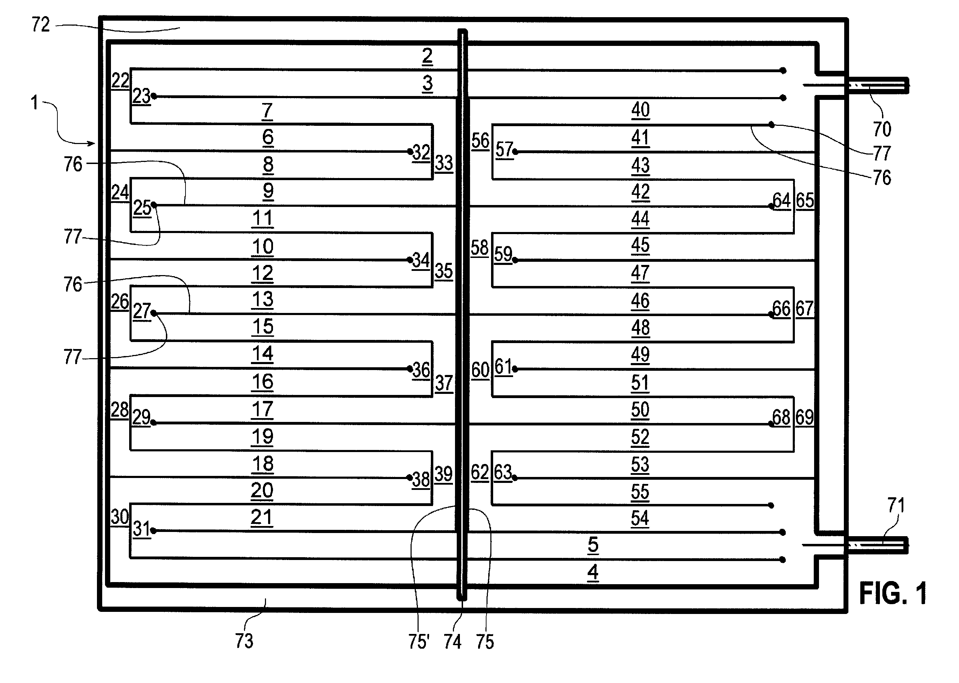

In der Fig. 1 ist zu erkennen, dass die Heizplatte 1 zwei sich in Längsrichtung über die gesamte Plattenlänge erstreckende Zuströmkanäle 2,3 und zwei sich in Längsrichtung über die gesamte Plattenlänge erstreckende Abströmkanäle 4,5 aufweist. Diese Zuströmkanäle 2,3 speisen eine Gruppe von Heizkanälen 6-21, welche in der linken Plattenhälfte angeordnet ist, die sich von dem linken Querrand der Heizplatte 1 bis zur Mitte der Heizplatte 1 erstreckt. Das Thermoöl strömt durch einen als Zuströmrohr 70 ausgebildeten Zulauf in die zwei Zuströmkanäle 2 und 3. Nach dem Durchlaufen der Heizkanäle 6 - 21 strömt es durch zwei Abströmkanäle 4,5 zu einem Ablauf, der als Abströmrohr 71 ausgebildet ist.

Die Bezugszeichen wurden den Heizkanälen und den weiteren Kanälen so zugeordnet, dass einerseits die geradzahligen Kanäle 2, 4, 6 usw. miteinander kommunizieren und ineinander übergehen und dass andererseits die ungeradzahligen Kanäle 3, 5, 7 usw. miteinander kommunizieren und ineinander übergehen.

Es ist zu erkennen, dass die geradzahligen Kanäle 2, 4, 6, 8, 10, 12, 14, 16, 18, 20 im Bereich nahe dem äußeren linken Rand der Heizplatte 1 durch längere Querkanäle22, 24, 26, 28, 30 miteinander verbunden sind. Die ungeradzahligen Kanäle 3, 5, 7, 9, 11, 13, 15, 17, 19, 21 sind nahe dem äußeren linken Plattenrand durch kurze Querkanäle 23, 25, 27, 29, 31 miteinander verbunden. Die kurzen Querkanäle 23 werden im inneren Bereich im Wesentlichen durch den Schweißpunkt 77 definiert, der jeweils am Ende einer Rollschweißnaht 76 angeordnet ist.

Im Bereich nahe der Mitte der Heizplatte 1 ist dies umgekehrt. Die geradzahlingen Kanäle 2, 4, 6, 8, 10, 12, 14, 16, 18, 20 sind im Bereich der Mitte durch kurze Querkanäle 32, 34, 36, 38 miteinander verbunden, wogegen die ungeradzahlingen Kanäle durch lange Querkanäle 33, 35, 37, 39 miteinander verbunden sind.

Mit dem Zuströmrohr 71 sind zwei weitere Heizkanäle 40, 41 verbunden. Diese führen das Thermoöl zu einer in der rechten Hälfte der Heizplatte 1 liegenden Gruppe von Heizkanälen40 - 55. Die letzten beiden Kanäle 54,55 dieser Gruppe sind mit dem Abströmrohr 19 verbunden.

Die geradzahligen Heizkanäle 40, 42, 44, 46, 48, 50, 52, 54 dieser Gruppe sind nahe der Mitte der Heizplatte 1 durch lange Querkanäle 56, 58, 60, 62 miteinander verbunden. Die ungeradzahligen Heizkanäle 41, 43, 45, 47, 49, 51, 53, 55 sind nahe der Mitte durch kurze Querkanäle 57, 59, 61, 63 miteinander verbunden. Am äußeren rechten Rand ist dies wiederum umgekehrt. Die kurzen Querkanäle 64, 66, 68 verbinden die geradzahligen Heizkanäle 40, 42, 44, 46, 48, 50, 52, 54 miteinander. Die langen Querkanäle 65, 67, 69 verbinden die ungeradzahligen Heizkanäle 41, 43, 45, 47, 49, 51, 53, 55 miteinander.

Auf diese Weise entstehen zwei Gruppen von mäanderförmig ineinander verschachtelten Doppelkanälen, die sich im Wesentlichen über die gesamte Fläche der Heizplatte 1 erstrecken. Die Querkanäle 22-31; 64-69, die jeweils in der Nähe eines Plattenrandes angeordnet sind, verbinden die außenliegenden Enden der Heizkanäle 6-21; 40-54 miteinander. Die Querkanäle 32-39; 56-63, die jeweils in der Nähe der Unterbrechung der Heizkanäle 6-21; 40-54 nahe der Plattenmitte angeordnet sind, verbinden die innenliegenden Enden der Heizkanäle 6-21; 40-54 miteinander.

Im Bereich der Unterbrechung der Heizkanäle erstreckt sich ein Verstärkungsprofil 74. Im mittleren Bereich der Heizplatte 1 ist dort, wo die Heizkanäle unterbrochen sind, eine Aussparung im Material der Heizplatte angeordnet, welche von dem Verstärkungsprofil 74 durchragt und ausgefüllt wird. Das Verstärkungsprofil 74 ist mit den Rändern der Aussparung über Schweißnähte 75, 75' verschweißt.

Das Verstärkungsprofil 74 besteht aus einem mehrere Zentimeter breiten und z.B. 1 - 3 cm dicken Stahlprofil.

Im Bereich der äußeren Ränder 72, 73 liegt das Verstärkungsprofil 74 vorzugsweise unmittelbar gegen den Rand 70,71 der Heizplatte an. Das Verstärkungsprofil 68 kann hier mit dem Rand 70,71 der Heizplatte 1 verschweißt sein oder auch frei gegen diesen Rand anliegen. Dies steigert die gesamte strukturelle Tragfähigkeit der Anordnung bestehend aus Heizplatte 1 und Verstärkungsprofil 74. Auf dem Verstärkungsprofil 74 sowie auf ggf. weiteren auf der Heizplatte aufliegenden Tragprofilen (nicht dargestellt) ruht im Betrieb eine Backplatte, z.B. aus Stein, auf welche die Backwaren aufgelegt werden.

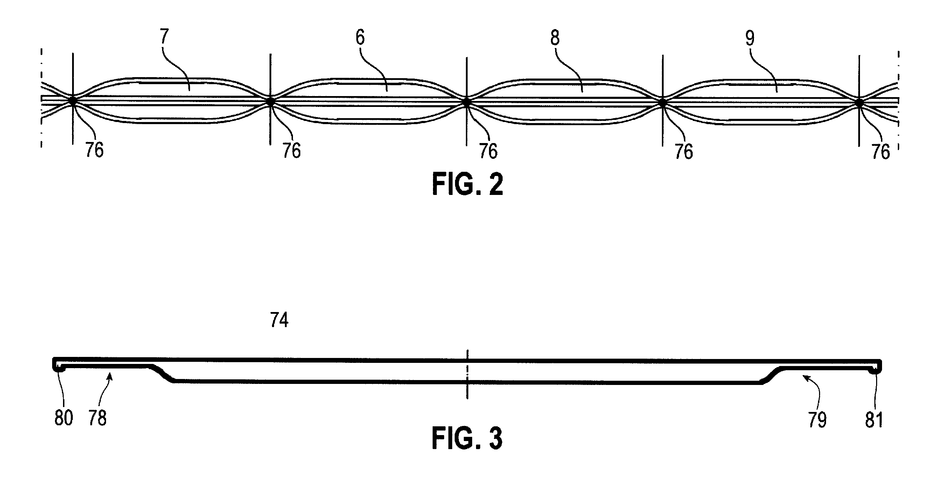

Im Bereich der sich über die gesamte Plattenlänge erstreckenden Zuströmkanäle 2,3 und Abströmkanäle 4,5 sind Ausnehmungen 78,79 (siehe Fig. 3) vorgesehen, welche die Zuströmkanäle 2,3 und Abströmkanäle 4,5 aufnehmen und einen Materialkontakt zwischen den Kanalwandungen und dem Material des Verstärkungsprofils vermeiden. An den Enden des Verstärkungsprofils 74 sind Vorsprünge 80, 81 vorgesehen, welche gegen das Blechmaterial der Heizplatte 1 anliegen.

Die Kontur der Heizkanäle 6 - 9 ist detailliert in der Fig. 2 zu erkennen, in der auch der Querschnitt durch die Rollschweißnähte 76 dargestellt ist.

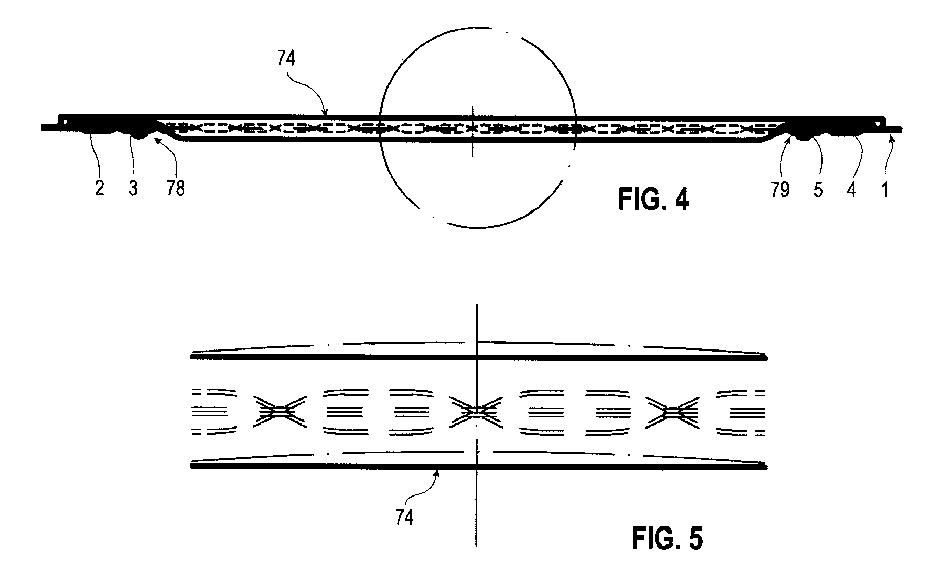

Die Fig. 4 zeigt das in die Aussparung der Schweißplatte 1 eingefügte Verstärkungsprofil 74 und Fig. 5 zeigt eine vergrößerte Ansicht des mittleren Bereichs des Verstärkungsprofils 74. Hier ist der Verlauf der Ränder des Verstärkungsprofils 74 in einer strichpunktierten Linien übertrieben eingezeichnet. Es ist zu erkennen, dass das Verstärkungsprofil über seine Länge nach oben gebogen ist. Diese Biegung wirkt der Biegung nach unten aufgrund der Schwerkraft entgegen.

### Bezugszeichenliste

- 1: Heizplatte
- 2,3: Zuströmkanal
- 4,5: Abströmkanal
- 6 - 21: Heizkanal
- 22,24,26,28,30,33,35,37,39: langer Querkanal
- 23,25,27,29,31,32,34,36,38: kurzer Querkanal
- 56,58,60,62,65,67,69: langer Querkanal
- 57,59,61,63,64,66,68: kurzer Querkanal
- 40 - 54: Heizkanal
- 70: Zuströmrohr
- 71: Abströmrohr
- 72, 73: längs verlaufender Rand
- 74: Verstärkungsprofil
- 75, 75': Schweißnaht
- 76: Rollschweißnaht
- 77: Schweißpunkt
- 78,79: Ausnehmung
- 80,81: Vorsprung

## Patentansprüche

1. Heizplatte (1) mit mehreren parallelen Heizkanälen (6-21; 40-54) zur Aufnahme eines Heizmediums, insbesondere Thermoöl, und mit mehreren, im Randbereich der Heizplatte (1) angeordneten Querkanälen (22-31; 64-69), welche mindestens zwei der Heizkanäle (6-21; 40-54) miteinander verbinden, wobei die Heizkanäle (6-21; 40-54) zwischen den Randbereichen der Heizplatte (1) mindestens eine Unterbrechung aufweisen und zusätzliche Querkanäle (32-39; 56-63) im Bereich der Unterbrechung jeweils zwei zueinander parallele Heizkanäle (6-21; 40-54) miteinander verbinden, **dadurch gekennzeichnet, dass** im Bereich der Unterbrechung der Heizkanäle (6-21; 40-54) ein Verstärkungsprofil (74) angeordnet ist.

2. Heizplatte (1) nach Anspruch 1, **dadurch gekennzeichnet, dass** die Unterbrechung der Heizkanäle (6-21; 40-54) in der Mitte der Heizplatte (1) angeordnet ist.

3. Heizplatte (1) nach Anspruch 1 oder 2, **dadurch gekennzeichnet, dass** die Heizkanäle (6-21 bzw. 40-54), die auf einer Seite der Unterbrechung liegen, durch Querkanäle (22-39 bzw. 56-69) miteinander verbunden werden, die auf der gleichen Seite der Unterbrechung liegen.

4. Heizplatte (1) nach einem der vorangehenden Ansprüche, **dadurch gekennzeichnet, dass** das Verstärkungsprofil (74) eine im Bereich der Unterbrechung der Heizkanäle (6-21; 40-54) angeordnete Aussparung in der Heizplatte (1) durchragt.

5. Heizplatte (1) nach einem der vorangehenden Ansprüche, **dadurch gekennzeichnet, dass** das Verstärkungsprofil (74) mit dem Material der Heizplatte (1) verschweißt ist.

6. Heizplatte (1) nach einem der vorangehenden Ansprüche, **dadurch gekennzeichnet, dass** sie mindestens einen Zuströmkanal (2,3) aufweist, der sich parallel zu den Heizkanälen (6-21; 40-54) über die gesamte Länge der Heizplatte (1) erstreckt.

7. Heizplatte (1) nach einem der vorangehenden Ansprüche, **dadurch gekennzeichnet, dass** sie mindestens einen Abströmkanal (4,5) aufweist, der sich parallel zu den Heizkanälen (6-21; 40-54) über die gesamte Länge der Heizplatte (1) erstreckt.

8. Heizplatte (1) nach Anspruch 6 oder 7, **dadurch gekennzeichnet, dass** das Verstärkungsprofil (74) im Bereich des Zuströmkanals (2,3) und/oder im Bereich des Abströmkanals (4,5) auf der gegen die Heizplatte (1) anliegenden Seite eine Ausnehmung (78,79) aufweist, welche den Zuströmkanal (2,3) bzw. den Abströmkanal (4,5) aufnimmt.

9. Heizplatte (1) nach Anspruch 8, **dadurch gekennzeichnet, dass** das Verstärkungsprofil (74) mindestens auf einer Seite des Zuströmkanals (2,3) bzw. des Abströmkanals (4,5) mit dem Rand der Heizplatte (1) verschweißt ist.

10. Backofen mit einer Umwälzvorrichtung für ein Heizmedium, welche mit einem Zuströmrohr (70) und einem Abströmrohr (71) mindestens einer Heizplatte (1) nach einem der vorangehenden Patentansprüche verbunden ist.
